# EUROPEAN PATENT APPLICATION

(11) **EP 4 583 331 A1**
(43) Date of publication of application: **09.07.2025**
(21) Application number: 23859323.0
(22) Date of filing: 29.08.2023
(51) Int. Cl.: H02B 1/46, H02B 1/48, G05B 19/042

(54) **DISTRIBUTION BOX HAVING DATA INTERACTION FUNCTION**

(30) Priority: 29.08.2022 CN 202211037269
(71) Applicant: Engineering Construction Management Branch Of China Southern Powergrid Power Generation Co., Ltd., Guangzhou, Guangdong 511402 (CN)
(72) Inventor: WANG, Haibo, Guangzhou, Guangdong 511402 (CN); LIN, Kai, Guangzhou, Guangdong 511402 (CN); LIU, Xueshan, Guangzhou, Guangdong 511402 (CN); GUO, Kai, Guangzhou, Guangdong 511402 (CN); CHEN, Zhiming, Guangzhou, Guangdong 511402 (CN); PENG, Qian, Guangzhou, Guangdong 511402 (CN); LIU, Tao, Guangzhou, Guangdong 511402 (CN); CHEN, Yuan, Guangzhou, Guangdong 511402 (CN); LV, Cheng, Guangzhou, Guangdong 511402 (CN); MENG, Jun, Guangzhou, Guangdong 511402 (CN); ZHANG, Zhongjie, Guangzhou, Guangdong 511402 (CN); LIU, Yan, Guangzhou, Guangdong 511402 (CN); LI, Jing, Guangzhou, Guangdong 511402 (CN)
(74) Representative: Murgitroyd & Company
(86) International application number: PCT/CN2023/115396
(87) International publication number: WO 2024/046293

(57) **Abstract**

Provided by the present invention is a power distribution box having a data interaction function, comprising a moving mechanism, a control mechanism and a data interaction mechanism. The moving mechanism comprises an electric valve and an electric telescopic rod. The control mechanism comprises a main control single-chip microcomputer and a control panel. The data interaction mechanism comprises a power distribution box tester and an output port. The electric valve is electrically connected to the main control single-chip microcomputer and is arranged at the bottom of the power distribution box. The control panel is arranged on a support rod and is electrically connected to the main control single-chip microcomputer. The power distribution box tester is electrically connected to the main control single-chip microcomputer and is arranged in the power distribution box, and the power distribution box tester is used for testing electrical devices of the power distribution box. The output port is electrically connected to the power distribution box tester, and is used for performing data interaction with external devices. A fixed end of the electric telescopic rod is arranged on the side wall of the power distribution box, and a moving end of the electric telescopic rod is aimed at the electric valve and is connected to the output port. The present invention can help maintenance personnel to quickly acquire data of power distribution boxes.

## Description

### TECHNICAL FIELD

The present application relates to the field of data interaction system technology, and particularly to a power distribution box with a data interaction function.

### BACKGROUND

The power distribution box is one of the important equipment in the distribution network. At present, the power distribution box is mainly installed on the support pole. Since the power distribution box has a certain distance from the ground, when data of the electrical equipment in the power distribution box needs to be obtained on-site, it can only be obtained from maintenance personnel through the climbing operations. Such process has certain safety risks, so that the data of the power distribution box cannot be obtained quickly, and accordingly the management and control efficiency of the distribution network is reduced.

### SUMMARY

**In** view of this, the purpose of the present invention is to provide a power distribution box with a data interaction function to at least solve the above problem.

The technical solution of the present invention is provided as follows.

A power distribution box with a data interaction function includes a power distribution box provided on a support rod, and includes a movement mechanism, a control mechanism and a data interaction mechanism, wherein the movement mechanism comprises an electric valve and an electric telescopic rod, the control mechanism comprises a main control single-chip microcomputer and a control panel, the data interaction mechanism comprises a power distribution box detector and an output port, the electric valve is electrically connected to the main control single-chip microcomputer and is provided at a bottom portion of the power distribution box, the electric valve is configured to connect to the outside, the control panel is provided on the support rod and is electrically connected to the main control single-chip microcontroller, the power distribution box detector is electrically connected to the main control single-chip microcomputer and is provided in the power distribution box, the power distribution box detector is configured to detect electrical equipment of the power distribution box, the output port is electrically connected to the power distribution box detector and is configured to exchange data with an external device, a fixed end of the electric telescopic rod is provided on a side wall of the power distribution box, and a movable end of the electric telescopic rod is aligned with the electric valve and is connected to the output port.

Further, the power distribution box includes a detection mechanism which comprises a sound-light indicator and an infrared sensor electrically connected to the main control single-chip microcomputer respectively, wherein the sound-light indicator is provided on the power distribution box, and the infrared sensor is provided on the power distribution box.

Further, the power distribution box includes a verification mechanism, which comprises a card slot, a door panel, and a face recognition device and an electric slide rail both of which are electrically connected to the main control single-chip microcomputer respectively, wherein the card slot is provided on the support rod, the electric slide rail is provided at an opening of the card slot, the door panel is provided on an actuator of the electric slide rail and is configured to block the connection between the outside and the card slot, the face recognition device is provided on the support rod, and the control panel is provided in the card slot.

Further, the power distribution box includes a communication module and an image processor electrically connected to the main control single-chip microcomputer respectively, wherein the main control single-chip microcomputer is configured to establish a communication connection with a remote control terminal through the communication module, the image processor is configured to compare a photo taken by the face recognition device to a photo transmitted by the remote control terminal.

Further, the movement mechanism further includes a lifter electrically connected to the main control single-chip microcomputer, and the lifter is provided on the support rod.

Further, the power distribution box includes a heat dissipation mechanism comprising a ventilation duct, and a temperature sensor and an exhaust fan both of which are electrically connected to the main control single-chip microcomputer respectively, wherein the ventilation duct is provided on and connected to the power distribution box, the exhaust fan is provided in the ventilation duct, and the temperature sensor is provided in the power distribution box.

Further, the power distribution box includes a blocking component including a filter screen, an air supply cavity, and a wind speed sensor and a rotating machine both of which are electrically connected to the main control single-chip microcomputer respectively, wherein a fixed end of the rotating machine is provided in the ventilation duct, and a rotatable end of the rotating machine is connected to the filter screen, the air supply cavity is provided at an end of the ventilation duct away from the power distribution box.

Compared to the prior art, the present invention has the following advantages.

The present invention provides a power distribution box with a data interaction function. When maintenance personnel need to quickly obtain on-site data of the electrical equipment in the power distribution box provided on the support pole, they can operate through control buttons on the control panel provided on the support pole, and then the main control single-chip microcomputer transmits the signal instruction to the solenoid valve and the electric telescopic rod respectively, so that the solenoid valve connected to the power distribution box is opened, and then the electric telescopic rod provided on the side wall of the power distribution box moves the output port towards the ground through the movable end of the electric telescopic rod, accordingly, the maintenance personnel can connect the output port through an external device, thereby implementing the connection between the external device and the power distribution box detector, so that the maintenance personnel can quickly obtain the data of the electrical equipment in the power distribution box.

### BRIEF DESCRIPTION OF THE DRAWINGS

In order to more clearly illustrate the technical solution in the embodiments of the present invention, the accompanying drawings required for use in the description of the embodiments will be briefly introduced below. Obviously, the drawings described below are merely preferred embodiments of the present invention, and those of skilled in the art can obtain other drawings based on these drawings without any creative effort.
FIG. 1 is a schematic diagram of an overall structure of a power distribution box with a data interaction function according to an embodiment of the present invention.
FIG. 2 is a schematic diagram of an overall circuit structure of a power distribution box with a data interaction function according to an embodiment of the present invention.

In the figures: 1, face recognition device; 2, electric slide rail; 3, communication module; 4, image processor; 5, lifter; 6, temperature sensor; 7, rotating machine; 8, wind speed sensor; 9, control panel; 10, electric valve; 11, electric telescopic rod; 12, power distribution box detector; 13, sound-light indicator; 14, infrared sensor; 15, exhaust fan; 16, main control single-chip microcomputer; 17, support rod; 18, output port; 19, power distribution box; 20, ventilation duct; 21, air supply cavity; 22, card slot; 23, door panel; 24, filter screen.

### DETAILED DESCRIPTION

The principle and features of the present invention are described below in conjunction with the accompanying drawings. The enumerated embodiments are only used for explaining the present invention, rather than limiting the scope of the present invention.

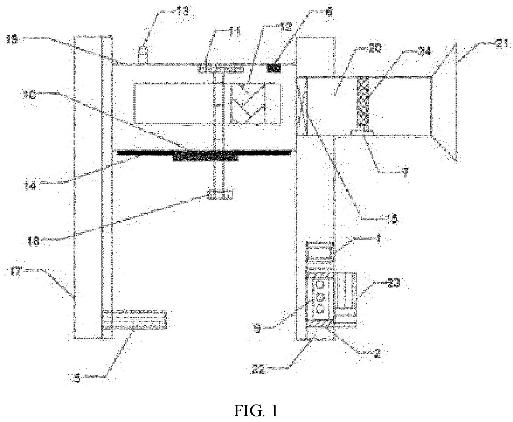

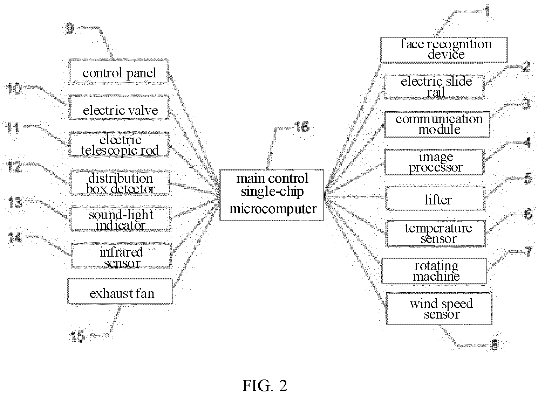

Referring to FIGS. 1 and 2, the present invention provides a power distribution box with a data interaction function, including a power distribution box 19 provided on a support rod 17, a movement mechanism, a control mechanism and a data interaction mechanism. The movement mechanism includes an electric valve 10 and an electric telescopic rod 11. The control mechanism includes a main control single-chip microcomputer 16 and a control panel 9. The data interaction mechanism includes a power distribution box detector 12 and an output port 18. The electric valve 10 is electrically connected to the main control single-chip microcomputer 16 and is provided at a bottom portion of the power distribution box 19. The electric valve 10 is configured to connect to the outside. The control panel 9 is provided on the support rod 17 and is electrically connected to the main control single-chip microcontroller 16. The power distribution box detector 12 is electrically connected to the main control single-chip microcomputer 16 and is provided in the power distribution box 19. The power distribution box detector 12 is configured to detect electrical equipment of the power distribution box 19. The output port 18 is electrically connected to the power distribution box detector 12 and is configured to exchange data with an external device. A fixed end of the electric telescopic rod 11 is provided on a side wall of the power distribution box 19, and a movable end of the electric telescopic rod 11 is aligned with the electric valve 10 and is connected to the output port 18.

For example, when needing to quickly obtain the on-site data of electrical equipment in the power distribution box 19 provided on the support pole 17, a maintenance personnel can operate through a control button on the control panel 9 provided on the support rod 17. Specifically, the control panel 9 is provided with "detection" and "off" buttons. When the maintenance personnel presses the "detection" button, the main control single-chip microcomputer 16 transmits a signal instruction to a solenoid valve and the electric telescopic rod 11 respectively, and then the solenoid valve connected to the power distribution box 19 is opened, accordingly the electric telescopic rod 11 provided on the side wall of the power distribution box 19 moves the output port 18 towards the ground through the movable end of the electric telescopic rod 11. As a result, the maintenance personnel can connect the output port 18 to an external device, thereby implementing the connection between the external device and the power distribution box detector 12, so that the maintenance personnel can quickly obtain the data of the electrical equipment in the power distribution box 19.

The embodiment may include a detection mechanism, which includes a sound-light indicator 13 and an infrared sensor 14 electrically connected to the main control single-chip microcomputer 16 respectively. The sound-light indicator 13 is provided on the power distribution box 19, and the infrared sensor 14 is provided on the power distribution box 19.

For example, in order to prevent an outsider from approaching the power distribution box 19 to steal the data of electrical equipment in the power distribution box 19, when the infrared sensor 14 provided on the power distribution box 19 detects that an outsider is approaching the power distribution box 19, the main control single-chip microcomputer 16 may transmit a signal instruction to the sound-light indicator 13, so that the sound-light indicator 13 performs a sound and light warning.

The embodiment may include a verification mechanism, which includes a card slot 22, a door panel 23, and a face recognition device 1 and an electric slide rail 2 both of which are electrically connected to the main control single-chip microcomputer 16 respectively. The card slot 22 is provided on the support rod 17, and the electric slide rail 2 is provided at an opening of the card slot 22. The door panel 23 is provided on an actuator of the electric slide rail 2 and is configured to block the connection between the outside and the card slot 22. The face recognition device 1 is provided on the support rod 17, and the control panel 9 is provided in the card slot 22.

As an example, in order to prevent an outsider from illegally obtaining the data of electrical equipment in the power distribution box 19, the control panel 9 can be arranged in the card slot 22, and a face recognition can be performed through the face recognition device 1. A person with the face recognition by the face recognition device 1 is only allowed to use the control panel 9. Specifically, when the maintenance personnel passes the face recognition by the face recognition device 1, the main control single-chip microcomputer 16 transmits a signal instruction to the electric slide rail 2, so that the actuator of the electric slide rail 2 drives the door panel 23 to move to open the door panel 23, and the maintenance personnel can reach into the card slot 22. Specifically, when the maintenance personnel presses the "off" button, the electric telescopic rod 11 brings the output port 18 back into the power distribution box 19, and closes the solenoid valve and the door panel 23.

The embodiment may include a communication module 3 and an image processor 4 which are electrically connected to the main control single-chip microcomputer 16 respectively. The main control single-chip microcomputer 16 establishes a communication connection with a remote control terminal through the communication module 3. The image processor 4 compares a photo taken by the face recognition device 1 to a photo transmitted by the remote control terminal.

For example, in order to facilitate a mobile maintenance personnel, when the maintenance personnel need to obtain the data of the electrical equipment in the power distribution box 19, the maintenance personnel can transmit their own photos to the remote control terminal in advance. When the maintenance personnel arrive at the site, the face recognition device 1 transmits the recognized photos to the image processor 4. The image processor 4 compares photos recognized by the face recognition device 1 to the photos transmitted by the remote control terminal, and only those who pass the verification through the comparison can open the door panel 23.

The movement mechanism further includes a lifter 5 electrically connected to the main control single-chip microcomputer 16. The lifter 5 is provided on the support rod 17.

As an example, a "move" button is further provided on the control panel 9. When the maintenance personnel need to replace the electrical equipment in the power distribution box, the "move" button can be pressed once, and the lifter 5 may move towards the power distribution box 19. When the "move" button is pressed twice in succession, the lifter 5 may move towards the ground.

The embodiment may include a heat dissipation mechanism including a ventilation duct 20, and a temperature sensor 6 and an exhaust fan 15 both of which are electrically connected to the main control single-chip microcomputer 16 respectively. The ventilation duct 20 is provided on and connected to the power distribution box 19. The exhaust fan 15 is provided in the ventilation duct 20, and the temperature sensor 6 is provided in the power distribution box 19.

As an example, in order to ensure the smooth operation of the electrical equipment in the power distribution box 19, when the temperature sensor 6 provided in the power distribution box 19 detects that the temperature exceeds a set temperature threshold, the main control single-chip microcomputer 16 transmits a signal instruction to the exhaust fan 15, so that the exhaust fan 15 provided in the ventilation duct 20 performs exhaust and heat dissipation. The arrangement of the ventilation duct 20 can prevent rainwater from intruding into the electrical equipment in the power distribution box 19 when a traditional exhaust fan 15 provided on the power distribution box 19 performs the heat dissipation. Specifically, the temperature threshold is independently set by the maintenance personnel according to actual situations.

The embodiment may include a blocking component including a filter screen 24, an air supply cavity 21, and a wind speed sensor 8 and a rotating machine 7 both of which are respectively electrically connected to the main control single-chip microcomputer 16. A fixed end of the rotating machine 7 is provided in the ventilation duct 20, and a rotatable end of the rotating machine 7 is connected to the filter screen 24. The air supply cavity 21 is provided at an end of the ventilation duct 20 away from the power distribution box 19.

As an example, in order to reduce the operating loss of the exhaust fan 15, when the wind speed sensor 8 detects that the wind speed in the surrounding environment reaches the set wind speed threshold, the main control single-chip microcomputer 16 transmits a signal instruction to stop operating to the exhaust fan 15, so that the external wind blows the fan blades of the exhaust fan 15 through the air supply cavity 21 to blow and dissipate the heat inside the power distribution box 19, thereby cooling the power distribution box 19. Meanwhile, in order to prevent foreign objects from entering the power distribution box 19 from the ventilation duct 20, when the exhaust fan 15 stops operating, the main control single-chip microcomputer 16 transmits a signal instruction to the rotating machine 7, so that the rotatable end of the rotating machine 7 drives the filter screen 24 to be in a closed state, that is, the filter screen 24 is perpendicular to the ventilation duct 20. When the exhaust fan 15 operates, the main control single-chip microcomputer 16 transmits a signal instruction to the rotating machine 7, so that the rotatable end of the rotating machine 7 drives the filter screen 24 to be in an open state, that is, the filter screen 24 is parallel to the ventilation duct 20 to implement better heat dissipation. Specifically, the wind speed threshold is independently set by maintenance personnel according to actual conditions.

The above embodiments are merely preferred embodiments of the present invention and are not intended to limit the present invention. Any modifications, equivalent substitutions, improvements, etc., made within the spirit and principle of the present invention should be regarded as falling within the protection scope of the present invention.

## Claims

1. A power distribution box with a data interaction function, comprising a power distribution box provided on a support rod, comprising:
a movement mechanism, a control mechanism and a data interaction mechanism, wherein the movement mechanism comprises an electric valve and an electric telescopic rod, the control mechanism comprises a main control single-chip microcomputer and a control panel, the data interaction mechanism comprises a power distribution box detector and an output port, the electric valve is electrically connected to the main control single-chip microcomputer and is provided at a bottom portion of the power distribution box, the electric valve is configured to connect to the outside, the control panel is provided on the support rod and is electrically connected to the main control single-chip microcontroller, the power distribution box detector is electrically connected to the main control single-chip microcomputer and is provided in the power distribution box, the power distribution box detector is configured to detect electrical equipment of the power distribution box, the output port is electrically connected to the power distribution box detector and is configured to exchange data with an external device, a fixed end of the electric telescopic rod is provided on a side wall of the power distribution box, and a movable end of the electric telescopic rod is aligned with the electric valve and is connected to the output port;
a verification mechanism, which comprises a card slot, a door panel, and a face recognition device and an electric slide rail both of which are electrically connected to the main control single-chip microcomputer respectively, wherein the card slot is provided on the support rod, the electric slide rail is provided at an opening of the card slot, the door panel is provided on an actuator of the electric slide rail and is configured to block the connection between the outside and the card slot, the face recognition device is provided on the support rod, and the control panel is provided in the card slot;
a communication module and an image processor electrically connected to the main control single-chip microcomputer respectively, wherein the main control single-chip microcomputer is configured to establish a communication connection with a remote control terminal through the communication module, the image processor is configured to compare a photo taken by the face recognition device to a photo transmitted by the remote control terminal;
a heat dissipation mechanism comprising a ventilation duct, and a temperature sensor and an exhaust fan both of which are electrically connected to the main control single-chip microcomputer respectively, wherein the ventilation duct is provided on and connected to the power distribution box, the exhaust fan is provided in the ventilation duct, and the temperature sensor is provided in the power distribution box; and
a blocking component comprising a filter screen, an air supply cavity, and a wind speed sensor and a rotating machine both of which are electrically connected to the main control single-chip microcomputer respectively, wherein a fixed end of the rotating machine is provided in the ventilation duct, a rotatable end of the rotating machine is connected to the filter screen, and the air supply cavity is provided at an end of the ventilation duct away from the power distribution box.

2. The power distribution box with the data interaction function according to claim 1, further comprising a detection mechanism which comprises a sound-light indicator and an infrared sensor electrically connected to the main control single-chip microcomputer respectively, wherein the sound-light indicator is provided on the power distribution box, and the infrared sensor is provided on the power distribution box.

3. The power distribution box with the data interaction function according to claim 1, wherein the movement mechanism further comprises a lifter electrically connected to the main control single-chip microcomputer, and the lifter is provided on the support rod.
